# EUROPEAN PATENT SPECIFICATION

(11) **EP 2 069 119 B1**
(45) Date of publication and mention of the grant of the patent: **14.12.2016**
(21) Application number: 07760310.8
(22) Date of filing: 09.04.2007
(51) Int. Cl.: B22D 17/26, B29C 45/67

(54) **TWO PLATEN TRAVERSE CYLINDER MOUNTING SYSTEM**
ZWEIPLATTEN-QUERZYLINDERBEFESTIGUNGSSYSTEM
SYSTÈME DE MONTAGE DE CYLINDRE TRAVERSANT À DEUX PLAQUES

(30) Priority: 10.04.2006 US 790641 P; 12.04.2006 US 791356 P; 02.04.2007 US 695293
(43) Date of publication of application: 17.06.2009
(73) Proprietor: Buhlerprince, Inc., Holland MI 49423 (US)
(72) Inventor: BARON, Frank D. R., Caledonia, Michigan 49316 (US); BROWER, Rodger W., Allendale, Michigan 49401 (US); HEGEL, Robert W., Holland, Michigan 49423 (US); HAUSER, Daniel, CH-9000 St. Gallen (CH); LUCHETTI, Marco, CH-9244 Niederuzwil (CH)
(74) Representative: Hepp Wenger Ryffel AG
(86) International application number: PCT/US2007/066221
(87) International publication number: WO 2007/121134

(56) References cited:
- DD-A1- 132 944
- US-A- 5 059 365
- US-A- 5 059 365
- US-A- 5 701 944
- US-A- 5 701 944
- US-B1- 6 488 884
- US-B1- 6 488 884

## Description

### BACKGROUND OF THE INVENTION

The present invention relates to a mounting system for a traverse cylinder in a die cast machine.

Two platen die cast machines are used for the die casting of relatively large parts from molten metal alloys. The die casting of such parts utilizing metal alloys requires larger and more complex dies and tooling than conventional injection molding. The space between the platens of such die cast machines and the tie bars coupling the platens together preferably is free of obstructions for replacement or removing of the dies. Cores, slides, or other devices on the dies that are perpendicular to the parting line of the die cannot extend beyond the tie bars. Thus, die casting machine designs are more restrictive than injection molding machines in that the space between the platens preferably is unoccupied.

The contraction of aluminum during solidification after injection of the molten material in such die cast machines requires relatively high forces to open the machine for removing the casting from the die. Also, more complicated tooling requires higher closing forces to lock the various die cores and slides into position. Thus, the opening and closing structure for such a machine must provide a significant force for operating the moving platen. The force is optimal if it can be centered on a moving platen.

Typically, two platen injection die casting machines utilize hydraulic cylinders referred to as traverse cylinders, which are located between the stationary and moving platens of the machine to open and close the die. These cylinders typically are symmetrical about the center of the platens. Frequently, for example, one of the cylinders may be located near an upper tie bar on one side of the machine and a second cylinder on the opposite side of the machine near the lower tie bar. This allows for symmetrical placement and assists in evening the opening and closing forces on the platens. While such cylinder location works well for relatively small injection molding machines, in die cast machines, the cylinders cannot interfere with positioning of wide dies used in such die cast machines and interfere with the automation or manual interaction with a die for typical operations.

Some efforts have been made to position traverse cylinders behind the moving platen and coupled to the back side of the moving platen and to a pedestal mounted on the base of the machine. This removes the cylinders from the die space, however, large forces generated from the rapid opening and closing of the somewhat massive moving platen produces large forces and bending moments at the connection between the cantilevered pedestal and the base, which can, as a result, be subject to failure. Also, opposed traverse cylinders have been mounted between the ends of the tie rods and the fixed platen in a die cast machine in which the tie rods are removed from the fixed platen during each cycle. This results in an undesirable increase in the duty cycle of operation. Also, the traverse cylinders undesirably extend within the die space and a less than desirable balance of opening and closing forces are exerted by the traverse cylinders.

In DD132944A1, a 3-platen injection molding machine is described. There are no support bars coupled to ends of adjacent tie bars on a side of a movable platen opposite to a fixed platen.

The system of the present invention overcomes these problems by freeing the die space between the platens of a two platen machine while at the same time providing a relatively fast operating system which provides balanced opening and closing forces for the die cast machine.

### SUMMARY OF THE INVENTION

The system of the present invention provides a unique mounting system for traverse cylinders, which are positioned behind the movable platen on a side opposite the stationary platen and out of the die area between the platens. The mounting structure couples at least one traverse cylinder to a pair of tie bars to transfer the die opening and closing forces onto the tie bars instead of the frame of the machine. The system, in a preferred embodiment, includes a horizontally extending cylinder support bar mounted between the lower tie bars and fixedly secured to the ends of the lower tie bar. One end of the traverse cylinder is mounted to the side of the support bar facing the fixed platen and generally centered between and above the lower tie bars. The opposite end of the traverse cylinder is coupled to the rear surface of the movable platen. Thus, when the double acting traverse cylinder is activated to close the die cast machine, it places a tensile force on the tie bars for effecting closure of the machine. When actuated for opening, the traverse cylinder places the tie bars in compression to move the movable platen for separating the dies for removing a cast part.

The system, in another embodiment, includes a vertically extending cylinder support bar mounted to the lower and upper tie bar on each side of the machine, with the lower end being fixedly secured to the end of the lower tie bar and the upper end being detachably secured to the end of the upper tie bar. One end of a traverse cylinder is mounted to the side of the support bar facing the fixed platen and is generally centered vertically between the upper and lower tie bars on each side of the machine. The opposite end of the traverse cylinders are coupled to the rear surface of the movable platen. In this embodiment, the coupling mechanism for decoupling the upper ends of the tie bars from the support bars allows the upper tie bars to be moved through the vertically extending traverse cylinder support bars without removing the support bars from the machine. In one embodiment, the ends of the upper tie bars are fixedly coupled to a retainer plate which, in turn, is selectively coupled to the upper ends of the support bars by movable locking and cross pins.

In both embodiments, the positioning of the traverse cylinder(s) behind the movable platen allows dies to be changed and facilitates the replacement or repair of the dies. With such a system, a relatively large die cast machine capable of operation in the 3000 to 4000 ton range can be relatively quickly opened and closed using one or more traverse cylinders which do not interfere with the placement of dies. These and other features, objects and advantages of the present invention will become apparent upon reading the following description thereof together with reference to the accompanying drawings.

### BRIEF DESCRIPTION OF THE DRAWINGS

Fig. 1 is a perspective view of a two platen die cast machine incorporating the present invention;
Fig. 2 is a left side elevational view of the machine shown in Fig. 1, taken from the direction of arrow II in Fig. 1;
Fig. 3 is an enlarged perspective view of the traverse cylinder support bars removed from the machine and showing the traverse cylinders mounted thereto;
Fig. 4 is a cross-sectional view of the removable mounting of the upper end of one of the support bars to the upper tie bar;
Fig. 5 is a perspective view of a section of a die casting machine incorporating an alternative embodiment of the invention;
Fig. 6 is a top plan view, in partial cross section, of the movable platen and support bar and mounting arrangement to the lower tie bars of the machine shown in Fig. 5;
Fig. 7 is a cross-sectional view of the structure shown in Fig. 6, taken along section lines VII-VII in Fig. 6; and
Fig. 8 is an end elevational view of the support bar shown in Figs. 5-7.

### DETAILED DESCRIPTION OF THE PREFERRED EMBODIMENT

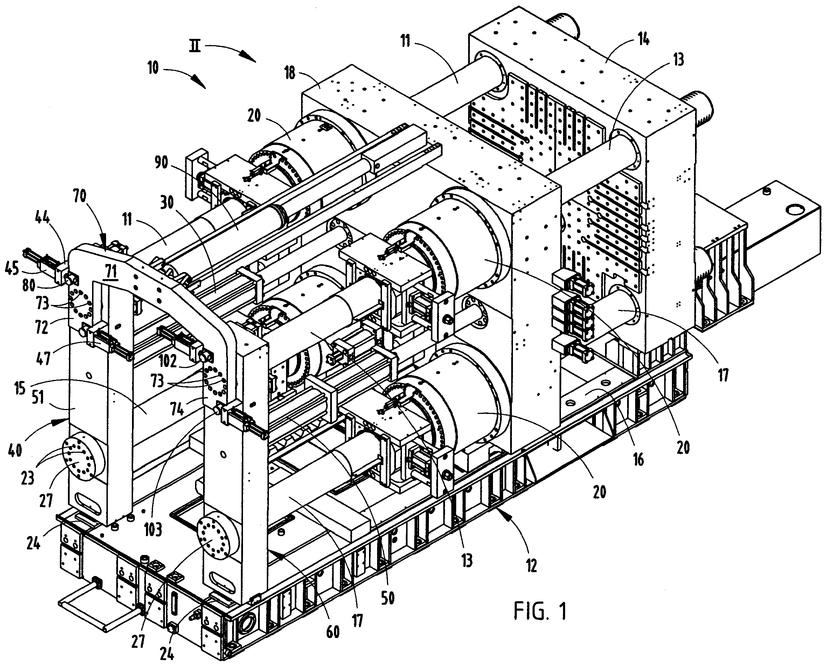

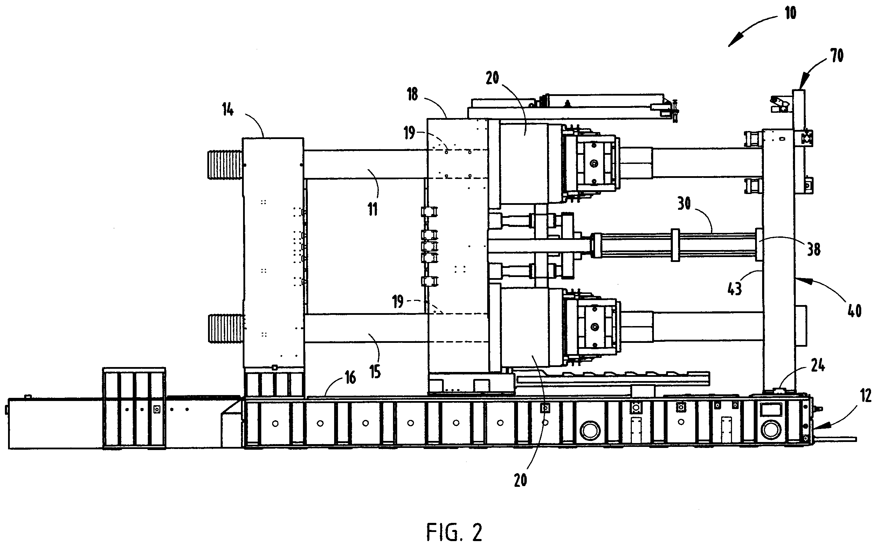

The die cast machine 10 of the present invention is shown in Figs. 1 and 2 and includes a frame 12 on which there is mounted a fixed platen 14 and movably mounted on rails 16 is a movable platen 18. Platens 14 and 18 are coupled by four tie bars, including upper tie bars 11 and 13 and lower tie bars 15 and 17. One end of each of the tie bars is mounted to the fixed platen 14 in a conventional manner and movably coupled to the movable platen 18 through apertures 19 (Fig. 2) in platen 18 by means of four substantially identical threaded locking mechanisms 20 which engage the threaded ends of the tie bars 11, 13, 15, and 17 when platen 18 is in a closed position, allowing four substantially identical pressure cylinders associated with locking mechanism 20 to apply lock-up pressure to the movable platen and dies contained between the fixed and movable platens, respectively.

Machine 10 can generally be of the type shown in U.S. Patent Publication 2003/0217829 with respect to the frame, fixed and movable platens, the rail system, and certain aspects of the locking mechanism. Machine 10, however, includes additional improvements including the traverse cylinder mounting system as described herein.

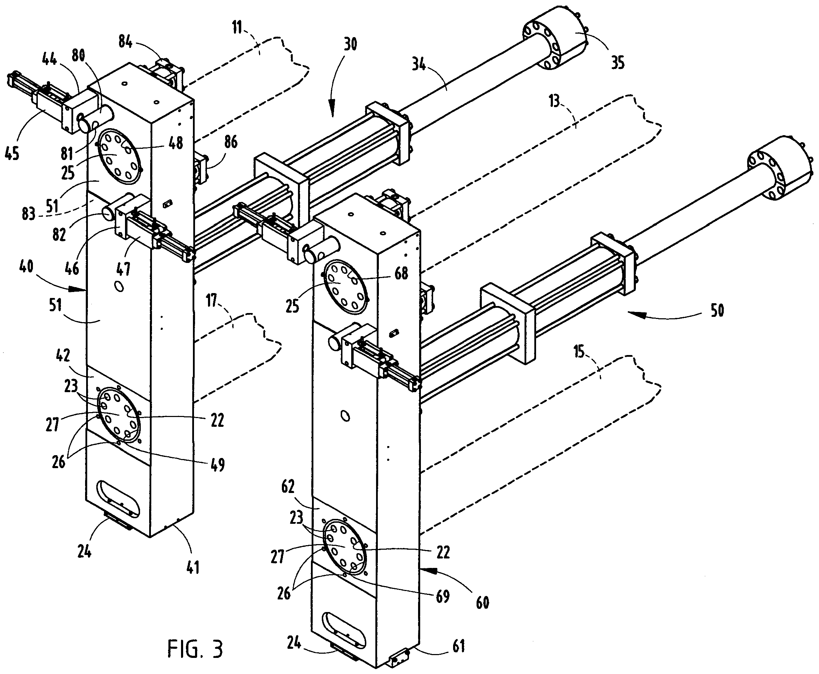

Referring now to Figs. 1-3, there is shown a traverse cylinder mounting system in which a first traverse cylinder 30 is mounted to a generally vertically extending support bar 40, and a second traverse cylinder 50 is mounted to a second support bar 60. The cylinders and support bars are substantially identical in construction, such that only one of the mounting structures is described in detail. Each of the support bars 40 and 60 include upper and lower apertures 48 and 68 (Fig. 3) for receiving the ends of upper tie bars 11 and 13, respectively, and 49 and 69 for the ends of lower tie bars 15 and 17, respectively. The tie bars are shown in Fig. 3 in phantom lines. Support bars 40 and 60 are detachably secured to the ends 25 of upper tie bars 11 and 13, respectively, through a retainer plate 70 (Fig. 1), as described below. Ends 27 of lower tie bars 15 and 17 are fixedly secured to the support bars 40 and 60 by means of mounting plates 42 and 62 (Fig. 3). Plates 42, 62 are bolted to the ends 27 of the associated tie bars with bolts 23 extending through the plates into ends 27 of the tie bars and bolts 26 extending through the plate into the support bars 40 and 60 to anchor the support bars to the lower tie bars 15 and 17, respectively. The bottom 41 and 61 of the support bars 40 and 60 are mounted to the frame 12 of the machine 10 by a floating bearing 24 which allows the support bars 40 and 60 to move slightly upon application of closure pressure on the movable platen, when in a closed position against the fixed platen during the casting process, as the tension on the tie bars tends to slightly elongate them. Support bars 40 and 60 thus are allowed to float on the frame 12 and move with the tensioning and contraction of the tie bars during casting.

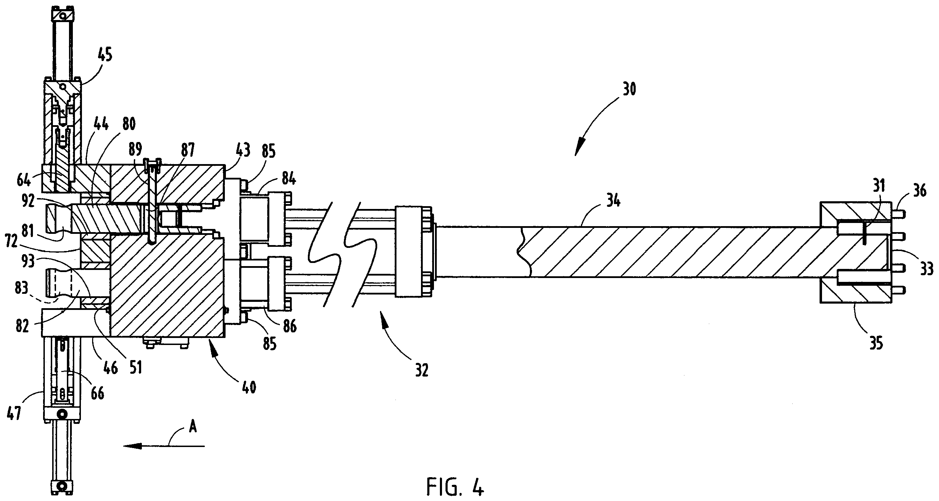

Ends 25 of upper tie bars 11 and 13 are mounted to the upper ends of support bars 40 and 60 by a retainer plate 70 (Figs. 1 and 2) to be decoupled from support bars 40 and 60 to allow the upper tie bars to be moved to an open position and be withdrawn from the die area, as illustrated in Fig. 4 in the above-identified published application. The decoupling mechanism for the upper end of support bars 40 and 60 is described below in connection with the description of the traverse cylinders 30 and 50.

Traverse cylinder 30 is shown in Fig. 4 and is identical to traverse cylinder 50. The traverse cylinder includes a high pressure dual acting cylinder body 32 with a piston rod 34 extendable therefrom and which is secured to the back surface of the movable platen, preferably midway between the upper and lower tie bars, as seen in Figs. 1-3, by means of a retainer 33. Retainer 33 is threaded onto the end of piston rod 34 and locked in place by a roll pin 31. Over the retainer 33, there is provided a split collar 35 which is threadably secured to the movable platen by means of a plurality of cap screws 36 of sufficient size and strength to withstand the opening forces for the movable platen. The opposite end of cylinder 30 includes a mounting flange 38 (Fig. 2) which is secured to the side 43 of support bar 40, which faces the movable platen 18 by suitable bolts. Typically, the traverse cylinders 30 and 50 will be at a location approximately midway between the upper and lower tie bars 11 and 13, and 15 and 17 , respectively, and vertically centered along the axis of the tie bars to provide even opening and closing forces for the movable platen.

Coupled to the ends 25 of the upper tie bars 11 and 13 by a plurality of bolts 73 are ends 72 and 74 of tie bar retainer plate 70, as shown in Fig. 1. Plate 70 is a generally inverted U-shaped plate having upwardly and inwardly converging legs integrally coupled to cross member 76 to which a tie bar withdrawing cylinder 90 (such as cylinder 90 shown in the above-identified publication) is coupled for moving the tie bars from the fixed and movable platens during die changing. The tie bar retainer plate 70 and tie bars are removably held to the upper ends of support bars 40 and 60 by the structure now described in connection with Figs. 3 and 4. Since the structure for detachably mounting the upper tie bars to the support bars 40 and 60 are identical, only the structure associated with bar 40 is described.

End 72 of retainer plate 70 is shown in cross section in Fig. 4 as it is positioned in nesting engagement with side 51 of support bar 40 and is removably, lockably coupled thereto by means of a pair of engaged retractable locking pins 80 and 82, which extend through apertures 92 and 93 in end 72 of plate 70. End 74 of plate 70 includes similar apertures for demounting end 74 from support bar 60. Locking pins 80 and 82 are coupled to hydraulic cylinders 84 and 86, respectively (Fig. 4), mounted to side 43 of support bar 40 by a plurality of mounting bolts 85.

When extended, pins 80 and 82 fit loosely through apertures 92 and 93 of end 72 of plate 70 such that the upper tie bars can be moved in a longitudinal direction between the offset pins 80 and 82 for removal of the upper tie bars. A keeper pin 89 (Fig. 4) is employed for mechanically locking each of the pins 80, 82 against rotation, with the pins 89 extending in an elongated slot 87 for receiving anti-rotation or keeper pin 89 and allowing locking pins 80, 82 to retract as described below.

In order to lock the upper ends of the support bars 40 and 60 to the tie bars through retainer plate 70, cross pins 64 and 66 extend through transverse apertures 81 and 83 in pins 80 and 82, respectively, to lock the ends 72 and 74 of retainer plate 70 to support bars 40 and 60, respectively. Pins 64 and 66 are retractably and extendably mounted to the support bars 40 and 60 by means of mounting brackets 44 and 46, as seen in Fig. 4, and are coupled by a floating connection to cylinders 45 and 47, respectively, mounted to brackets 44 and 46. Cylinders 45 and 47, when actuated, extend pins 64 and 66 into apertures 81 and 83, respectively. When extended into the apertures 81 and 83 of locking pins 80 and 82 and when the locking pins are retracted, cross pins 64 and 66 securely hold the ends 72 and 74 of plate 70 and the ends of tie bars 11 and 13 secured thereto to the upper ends of support bars 40 and 60, respectively. When pins 64 and 66 are extended, therefore, the upper ends of support bars 40 and 60 are effectively secured to the ends of tie bars 11 and 13. When cylinders 84 and 86 are actuated to retract pins 80 and 82 for holding plate 70 against side 51 of support bars 40 and 60, the outer face 71 (Fig. 1) of plate 70 is engaged by cross pins 64 and 66 to provide a secure and tight interconnection.

During normal operation of the die cast machine 10, the pins 64 and 66 will be extended through apertures 81 and 83 in pins 80 and 82, respectively, and cylinders 84 and 86 actuated to retract pins 80 and 82 to provide this fixed interconnection. When it is desired to remove the upper tie bars for replacing dies, cross pins 64 and 66 are retracted to allow tie bars coupled to retainer plate 70 to be moved in the direction of arrow A in Fig. 4 through tie bar receiving apertures 48 and 68 at the upper ends of support bars 40 and 60, respectively.

Thus, with the traverse cylinder mounting system of Figs. 1-4, traverse cylinders 30 and 50 are mounted between the upper and lower tie bars, respectively, on opposite sides of the machine and are fixedly mounted and coupled to generally vertically extending supports which are fixedly mounted at their lower end to the lower tie bar and decouplably mounted to the tie bars at an upper end for allowing the traverse cylinders to be positioned out of the way of the dies and effectively positioned for the opening and closing of the die cast machine when moving the movable platen between open and closed positions, respectively.

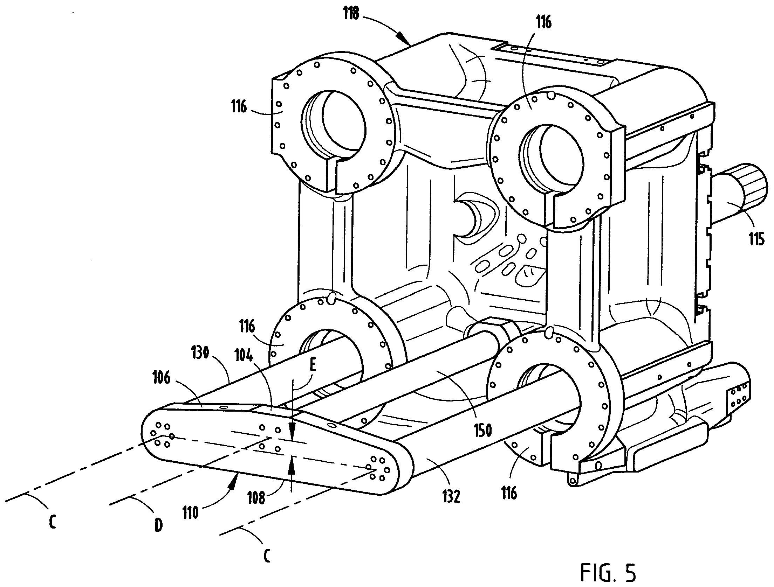

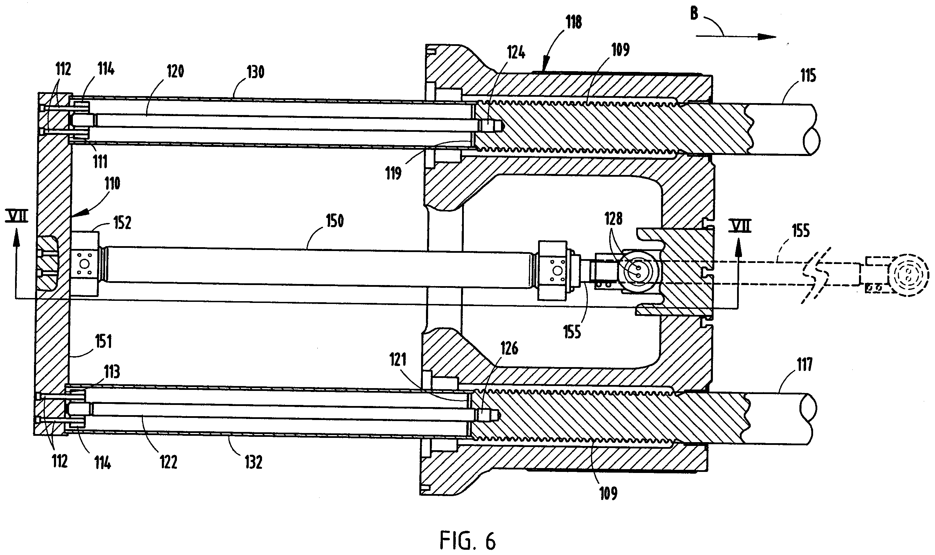

Fig. 5 shows the movable platen 118 of a die cast machine which includes the same main structural elements as the machine shown in Figs. 1-4 with the exception that the most preferred embodiment of the invention is employed for the mounting of a single traverse cylinder in Figs. 5-8. In this embodiment, instead of utilizing a pair of vertical support bars coupling to the ends of the upper and lower tie bars, a single horizontally extending support bar 110 is coupled to the lower tie bars 115 and 117 (Fig. 6) by the structure shown in details in Figs. 5-8. Not shown in Fig. 5 is the locking mechanism for the threaded ends of tie bars 115 and 117, however, the locking mechanism and tonnage cylinders are mounted in the same manner as that of the structure shown in Fig. 1-4 or in other conventional manners.

Fig. 6 best illustrates the coupling of the horizontal support bar 110 to the ends of tie bars 115 and 117. Each end of support bar 110 is secured by means of recessed cap screws 112 (Fig. 6) to a mounting plate 114 secured to one end of rods 120 and 122 having their opposite ends threadably secured at 124 and 126 to the ends of tie bars 115 and 117.

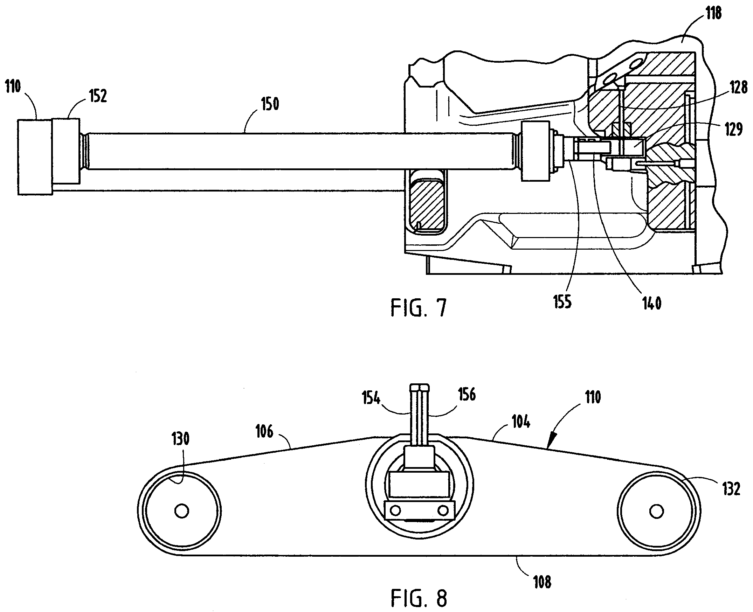

The traverse cylinder 150 is coupled to the surface of support bar 110 by means of a coupling 152 which provides for the application of hydraulic pressure through conduits 154 and 156 (Fig. 8) for the double acting traverse cylinder 150. In Fig. 6, the cylinder is shown with its piston rod 155 in the extended position in phantom form for closing the die halves prior to application of the final clamping pressure. Support bar 110 includes a lower, generally horizontally extending edge 108 and an upper edge 106 which has a raised center section 104 which positions the longitudinal axis D (Fig. 5) of the traverse cylinder 150 slightly above the longitudinal axes (C in Fig. 5) of rods 120, 122 to balance forces applied by the traverse cylinder to the movable platen 118 when opening and closing the movable platen. This offset is shown by distance arrow E in Fig. 5. Support bar 110 has circular sockets 111, 113 for receiving the ends of sleeves 130, 132. The opposite ends of sleeves 130, 132 fit over cylindrical extensions 119, 121 of tie bars 115, 117, as best seen in Fig. 6. The hollow guide sleeves 130 and 132 surround each of the rods 120, 122 which couple the support bar 110 to the ends of tie bars 115 and 117 for guidance through the moving platen as it is moved due to actuation of cylinder 150.

The end of piston rod 155 is coupled to the movable platen 118, as shown in Figs. 6 and 7, by means of cross pins 128 which extend through apertures in mounting plate 129 (Fig. 7) secured to the end of piston rod 155 by means of a yoke 140. In Figs. 5-8, the movable platen 118 includes mounting surfaces 116 which receive the locking mechanism for the threaded ends 109 of the tie bars 115, 117 when cylinder 150 is actuated to move the movable platen 118 in the direction indicated by arrow B in Fig. 6, thereby placing the threaded ends 109 of tie bars 115 and 117 into locking engagement with the locking mechanism and tonnage cylinders mounted to surfaces 116, as well as the corresponding upper tie bars. The upper tie bars may be coupled, as in the first embodiment, to a cross member and retraction cylinder extending between the movable platen 118 and the ends of the upper tie bars for withdrawing the upper tie bars (not shown) from the die area between the movable and fixed platens as in the first embodiment.

The preferred embodiments of the invention described herein may be modified by those skilled in the art to provide the desired fixed mounting of a traverse cylinder(s) to one or both sets of tie bars without departing from the spirit or scope of the invention as defined by the appended claims.

## Claims

1. A traverse cylinder mounting system for a die cast machine (10) comprising:
a die cast machine (10) including at least a fixed platen (14) and a moveable platen (18; 118) for holding dies there between for casting a part, said platens coupled by spaced tie bars (11, 13; 15, 17; 115, 117);
**characterized in that** the system further comprises:
at least one cylinder support bar (40, 60; 110) coupled to ends of adjacent tie bars (11, 17; 13, 15; 115, 117) on a side of said movable platen (18; 118) opposite said fixed platen (14); and
a traverse cylinder (30, 50; 150) having one end coupled to said support bar (40, 60; 110) and an opposite end coupled to said movable platen (18; 118) for opening and closing said machine (10) during operation.

2. The mounting system as defined in claim 1, wherein said cylinder support bar (110) is coupled to the ends of spaced lower tie bars (115, 117) on said machine (10).

3. The mounting system as defined in claim 2, wherein said support bar (110) is coupled to said movable platen (118) by coupling rods (120, 122) having one end secured to opposite ends of said support bar (110) and an opposite end secured to the ends of said tie bars (115, 117).

4. The mounting system as defined in claim 3, wherein said support bar (110) includes a raised center section (104) for coupling to said traverse cylinder (150) such that the longitudinal axis (D) of said traverse cylinder (150) is above the longitudinal axes (C) of said coupling rods (120, 122).

5. The mounting system as defined in claim 4 and further including a guide sleeve (130, 132) surrounding each of said coupling rods (120, 122) in concentric spaced relationship thereto.

6. The mounting system as defined in claim 1, wherein said cylinder support bar (40, 60) is coupled to a pair of vertically spaced tie bars (11, 15; 13, 17) on one side of said machine (10).

7. The mounting system as defined in claim 6, wherein said cylinder support bar (40, 60) is fixedly coupled to a lower one (15, 17) of said pair of tie bars and removably coupled to an upper one (11, 13) of said pair of tie bars.

8. The mounting system as defined in claim 7, wherein said traverse cylinder (30, 50) is coupled to said support bar (40, 60) at a location midway between said pair of tie bars (11, 15; 13, 17).

9. The mounting system as defined in claim 8, wherein said system includes two support bars (40, 60) coupled to pairs of vertically spaced tie bars (11, 15; 13, 17) on opposite sides of said machine (10).

10. The mounting system as defined in claim 9, and further including a retainer plate (70) having ends (72, 74) which are fixedly coupled to ends (25) of a pair of upper tie bars (11, 13) and wherein said retainer plate (70) is removably coupled to upper ends of said support bars (40, 60).

11. The mounting system as defined in claim 10, wherein said support bars (40, 60) each include an aperture (48, 68) at an upper end through which an end of an upper tie bar (11, 13) extends and a pair of locking pins (80, 82) extending in a direction parallel to the longitudinal axis of said upper tie bar (11, 13) and offset on opposite sides of said aperture (48, 68) and wherein said ends (72, 74) of said retainer plate (70) include a pair of apertures (92, 93) aligned with said locking pins (80, 82) for coupling said retainer plate (70) to said support bar (40, 60).

12. The mounting system as defined in claim 11, wherein said locking pins (80, 82) include a transversely extending aperture (81, 83) and said support bar (40, 60) includes movable cross pins (64, 66) which selectively extend through said transverse apertures (81, 83) of said locking pins (80, 82) to lock said retainer plate (70) and said tie bars (11, 13) coupled thereto to said support bar (40, 60).

13. The mounting system as defined in claim 12, wherein said locking pins (80, 82) are movably coupled to said support bar (40, 60) to extend and retract in a direction parallel to the longitudinal axis of said upper tie bar (11, 13) to secure said ends (72, 74) of said retainer plate (70) against said support bar (40, 60) during operation of said machine.

14. The mounting system as defined in claim 13, wherein said locking pins (80, 82) and said cross pins (64, 66) are coupled to activating cylinders (45, 47) mounted on said support bars (40, 60).

15. A traverse cylinder mounting system for a die cast machine according to claim 1, wherein said spaced tie bars (11, 13; 15, 17; 115, 117) are a pair of upper and a pair of lower tie bars, and wherein said cylinder support bar (40, 60, 110) is a traverse cylinder support bar (110) fixedly coupled at ends to the ends of lower tie bars (115, 117) on a side of said movable platen (118) opposite said fixed platen (14), said support bar (110) including a raised center section (104); and wherein saidtraverse cylinder (150) having one end coupled to the center section (104) of said support bar (110) and an opposite end coupled to said movable platen (118) such that the longitudinal axis (D) of said traverse cylinder (150) is above the longitudinal axes (C) of said lower tie bars (115, 117).

16. The mounting system as defined in claim 15, wherein said support bar (110) is coupled to said movable platen (118) by coupling rods (120, 122) having one end secured to opposite ends of said support bar (110) and an opposite end secured to the ends of said tie bars (115, 117).

17. The mounting system as defined in claim 16, and further including a guide sleeve (130, 132) surrounding each of said coupling rods (120, 122) in concentric spaced relationship thereto.

18. The mounting system as defined in claim 17, wherein said support bar (110) includes recesses (111, 113) for receiving one end of said sleeves (130, 132).

19. The mounting system as defined in claim 18, wherein an opposite end of said sleeves (130, 132) extend over an end (119, 121) of said lower tie bars (115, 117).

## Patentansprüche

1. Querzylinderbefestigungssystem für eine Druckgießmaschine (10), umfassend:
eine Druckgießmaschine (10), die mindestens eine feste Aufspannplatte (14) und eine bewegliche Aufspannplatte (18; 118) zum Halten von Pressformen zwischen ihnen zum Gießen eines Teils enthält, wobei die Aufspannplatten durch beabstandete Führungssäulen (11, 13; 15, 17; 115, 117) gekoppelt sind;
**dadurch gekennzeichnet, dass** das System ferner Folgendes umfasst:
mindestens eine Zylindertragestange (40, 60; 110), die an die Enden von benachbarten Führungssäulen (11, 17; 13, 15; 115, 117) auf einer Seite der beweglichen Aufspannplatte (18; 118) gegenüber der festen Aufspannplatte (14) gekoppelt ist; und
einen Querzylinder (30, 50; 150), dessen eines Ende an die Tragestange (40, 60; 110) gekoppelt ist und ein gegenüberliegendes Ende an die bewegliche Aufspannplatte (18; 118) gekoppelt ist, um die Maschine (10) während des Betriebs zu öffnen und zu schließen.

2. Befestigungssystem nach Anspruch 1, wobei die Zylindertragestange (110) an die Enden von beabstandeten unteren Führungssäulen (115, 117) auf der Maschine (10) gekoppelt ist.

3. Befestigungssystem nach Anspruch 2, wobei die Tragestange (110) an die bewegliche Aufspannplatte (118) durch Koppelstangen (120, 122) gekoppelt ist, deren eines Ende an gegenüberliegenden Enden der Tragestange (110) befestigt ist und ein gegenüberliegendes Ende an den Enden der Führungssäulen (115, 117) befestigt ist.

4. Befestigungssystem nach Anspruch 3, wobei die Tragestange (110) einen erhöhten Mittelabschnitt (104) zum derartigen Koppeln an den Querzylinder (150) enthält, dass die Längsachse (D) des Querzylinders (150) über der Längsachse (C) der Koppelstangen (120, 122) liegt.

5. Befestigungssystem nach Anspruch 4 und das ferner eine Führungshülse (130, 132) enthält, die jede der Koppelstangen (120, 122) in einer konzentrisch beabstandeten Beziehung zu ihr umgibt.

6. Befestigungssystem nach Anspruch 1, wobei die Zylindertragestange (40, 60) an ein Paar vertikal beabstandeter Führungssäulen (11, 15; 13, 17) auf einer Seite der Maschine (10) gekoppelt ist.

7. Befestigungssystem nach Anspruch 6, wobei die Zylindertragestange (40, 60) an eine untere Säule (15, 17) des Paars Führungssäulen fest gekoppelt ist und an eine obere Säule (11, 13) des Paars Führungssäulen lösbar gekoppelt ist.

8. Befestigungssystem nach Anspruch 7, wobei der Querzylinder (30, 50) an einem Ort in der Mitte zwischen dem Paar Führungssäulen (11, 15; 13, 17) an die Tragestange (40, 60) gekoppelt ist.

9. Befestigungssystem nach Anspruch 8, wobei das System zwei Tragestangen (40, 60) enthält, die an Paare vertikal beabstandeter Führungssäulen (11, 15; 13, 17) auf gegenüberliegenden Seiten der Maschine (10) gekoppelt sind.

10. Befestigungssystem nach Anspruch 9, das ferner eine Halteplatte (70) enthält, die Enden (72, 74) besitzt, die an Enden (25) eines Paars oberer Führungssäulen (11, 13) fest gekoppelt sind, und wobei die Halteplatte (70) an obere Enden der Tragestangen (40, 60) lösbar gekoppelt ist.

11. Befestigungssystem nach Anspruch 10, wobei die Tragestangen (40, 60) jeweils eine Öffnung (48, 68) an einem oberen Ende, durch die sich ein Ende einer oberen Führungssäule (11, 13) erstreckt, und ein Paar Verrieglungsstifte (80, 82), die sich in einer Richtung parallel zu der Längsachse der oberen Führungssäule (11, 13) und versetzt auf gegenüberliegenden Seiten der Öffnung (48, 68) erstrecken, enthalten und wobei die Enden (72, 74) der Halteplatte (70) ein paar Öffnungen (92, 93) enthalten, die auf die Verriegelungsstifte (80, 82) ausgerichtet sind, um die Halteplatte (70) an die Tragestange (40, 60) zu koppeln.

12. Befestigungssystem nach Anspruch 11, wobei die Verriegelungsstifte (80, 82) eine sich quer erstreckende Öffnung (81, 83) enthalten und die Tragestange (40, 60) bewegliche Kreuzzapfen (64, 66) enthält, die sich selektiv durch die Queröffnungen (81, 83) der Verriegelungsstifte (80, 82) erstrecken, um die Halteplatte (70) und die Führungssäulen (11, 13), die daran gekoppelt sind, mit der Tragestange (40, 60) zu verriegeln.

13. Befestigungssystem nach Anspruch 12, wobei die Verriegelungsstifte (80, 82) an die Tragestange (40, 60) beweglich gekoppelt sind, um sich in einer Richtung parallel zu der Längsachse der oberen Führungssäule (11, 13) auszudehnen und zurückzuziehen, um die Enden (72, 74) der Halteplatte (70) während des Betriebs der Maschine an der Tragestange (40, 60) zu fixieren.

14. Befestigungssystem nach Anspruch 13, wobei die Verriegelungsstifte (80, 82) und die Kreuzzapfen (64, 66) gekoppelt sind, um Zylinder (45, 47), die auf den Tragestangen (40, 60) befestigt sind, zu betätigen.

15. Querzylinderbefestigungssystem für eine Druckgießmaschine nach Anspruch 1, wobei die beabstandeten Führungssäulen (11, 13; 15, 17; 115, 117) ein paar oberer und ein Paar unterer Führungssäulen sind und wobei die Zylindertragestange (40, 60, 110) eine Querzylindertragestange (110) ist, die an ihren Enden an die Enden der
unteren Führungssäulen (115, 117) auf einer Seite der beweglichen Aufspannplatte (118) gegenüber der festen Aufspannplatte (14) fest gekoppelt ist, wobei die Tragestange (110) einen erhöhten Mittelabschnitt (104) enthält; und wobei der Querzylinder (150) ein Ende, das an den Mittelabschnitt (104) der Tragestange (110) gekoppelt ist, und ein gegenüberliegendes Ende besitzt, das derart an die bewegliche Aufspannplatte (118) gekoppelt ist, dass die Längsachse (D) des Querzylinders (150) über der Längsachse (C) der unteren Führungssäulen (115, 117) liegt.

16. Befestigungssystem nach Anspruch 15, wobei die Tragestange (110) durch Koppelstangen (120, 122), deren eines Ende an gegenüberliegenden Enden der Tragestange (110) befestigt ist, und ein gegenüberliegendes Ende an den Enden der Führungsschienen (115, 117) befestigt ist, an die bewegliche Aufspannplatte (118) gekoppelt ist.

17. Befestigungssystem nach Anspruch 16, das ferner eine Führungshülse (130, 132) enthält, die jede der Koppelstangen (120, 122) in einer konzentrischen beabstandeten Beziehung zu ihr umgibt.

18. Befestigungssystem nach Anspruch 17, wobei die Tragestange (110) Aussparungen (111, 113) zum Aufnehmen eines Endes der Hülsen (130, 132) enthält.

19. Befestigungssystem nach Anspruch 18, wobei sich ein gegenüberliegendes Ende der Hülsen (130, 132) über ein Ende (119, 121) der unteren Führungssäulen (115, 117) erstreckt.

## Revendications

1. Système de montage de vérin transversal pour une machine à couler sous pression (10) comprenant :
une machine à couler sous pression (10) comprenant au moins un plateau fixe (14) et un plateau mobile (18 ; 118) servant à supporter des matrices entre eux pour le coulage d'une pièce, lesdits plateaux étant accouplés par des barres de liaison (11, 13 ; 15, 17 ; 115, 117) espacées ;
**caractérisé en ce que** le système comprend en outre :
au moins une barre de support de vérin (40, 60 ; 110) accouplée à des extrémités de barres de liaison (11, 17 ; 13, 15 ; 115, 117) adjacentes sur un côté dudit plateau mobile (18 ; 118) opposé audit plateau fixe (14) ; et
un vérin transversal (30, 50 ; 150) comportant une extrémité accouplée à ladite barre de support (40, 60 ; 110) et une extrémité opposée accouplée audit plateau mobile (18 ; 118) pour l'ouverture et la fermeture de ladite machine (10) lors du fonctionnement.

2. Système de montage selon la revendication 1, dans lequel ladite barre de support de vérin (110) est accouplée aux extrémités de barres de liaison inférieures (115, 117) espacées sur ladite machine (10).

3. Système de montage selon la revendication 2, dans lequel ladite barre de support (110) est accouplée audit plateau mobile (118) par des tiges d'accouplement (120, 122) comportant une extrémité assujettie à des extrémités opposées de ladite barre de support (110) et une extrémité opposée assujettie aux extrémités desdites barres de liaison (115, 117).

4. Système de montage selon la revendication 3, dans lequel ladite barre de support (110) comprend une section centrale surélevée (104) pour l'accouplement audit vérin transversal (150) de telle sorte que l'axe longitudinal (D) dudit vérin transversal (150) soit situé au-dessus des axes longitudinaux (C) desdites tiges d'accouplement (120, 122).

5. Système de montage selon la revendication 4 et comprenant en outre un manchon de guidage (130, 132) entourant chacune desdites tiges d'accouplement (120, 122) de façon concentrique et espacée vis-à-vis de celles-ci.

6. Système de montage selon la revendication 1, dans lequel ladite barre de support de vérin (40, 60) est accouplée à une paire de barres de liaison (11, 15 ; 13, 17) espacées verticalement sur un côté de ladite machine (10).

7. Système de montage selon la revendication 6, dans lequel ladite barre de support de vérin (40, 60) est accouplée de manière fixe à une barre inférieure (15, 17) de ladite paire de barres de liaison et accouplée de manière amovible à une barre supérieure (11, 13) de ladite paire de barres de liaison.

8. Système de montage selon la revendication 7, dans lequel ledit vérin transversal (30, 50) est accouplé à ladite barre de support (40, 60) au niveau d'un emplacement situé à mi-chemin entre ladite paire de barres de liaison (11, 15 ; 13, 17).

9. Système de montage selon la revendication 8, dans lequel ledit système comprend deux barres de support (40, 60) accouplées à des paires de barres de liaison (11, 15 ; 13, 17) espacées verticalement sur des côtés opposés de ladite machine (10).

10. Système de montage selon la revendication 9, et comprenant en outre une plaque de retenue (70) comportant des extrémités (72, 74) qui sont accouplées de manière fixe à des extrémités (25). d'une paire de barres de liaison supérieures (11, 13) et dans lequel ladite plaque de retenue (70) est accouplée de manière amovible à des extrémités supérieures desdites barres de support (40, 60).

11. Système de montage selon la revendication 10, dans lequel lesdites barres de support (40, 60) comprennent chacune une ouverture (48, 68) au niveau d'une extrémité supérieure à travers laquelle s'étend une extrémité d'une barre de liaison supérieure (11, 13) et une paire de goupilles de verrouillage (80, 82) s'étendant dans une direction parallèle à l'axe longitudinal de ladite barre de liaison supérieure (11, 13) et décalées sur des côtés opposés de ladite ouverture (48, 68) et dans lequel lesdites extrémités (72, 74) de ladite plaque de retenue (70) comprennent une paire d'ouvertures (92, 93) alignées sur lesdites goupilles de verrouillage (80, 82) pour l'accouplement de ladite plaque de retenue (70 à ladite barre de support (40, 60).

12. Système de montage selon la revendication 11, dans lequel lesdites goupilles de verrouillage (80, 82) comprennent une ouverture s'étendant transversalement (81, 83) et ladite barre de support (40, 60) comprend des goupilles transversales mobiles (64, 66) qui s'étendent sélectivement à travers lesdites ouvertures transversales (81, 83) desdites goupilles de verrouillage (80, 82) de façon à verrouiller ladite plaque de retenue (70) et lesdites barres de liaison (11, 13) accouplées à celle-ci sur ladite barre de support (40, 60).

13. Système de montage selon la revendication 12, dans lequel lesdites goupilles de verrouillage (80, 82) sont accouplées de manière déplaçable à ladite barre de support (40, 60) afin de s'étendre et de se rétracter dans une direction parallèle à l'axe longitudinal de ladite barre de liaison supérieure (11, 13) de façon à assujettir lesdites extrémités (72, 74) de ladite plaque de retenue (70) contre ladite barre de support (40, 60) lors du fonctionnement de ladite machine.

14. Système de montage selon la revendication 13, dans lequel lesdites goupilles de verrouillage (80, 82) et lesdites goupilles transversales (64, 66) sont accouplées à des vérins d'activation (45, 47) montés sur lesdites barres de support (40, 60).

15. Système de montage de vérin transversal pour une machine à couler sous pression selon la revendication 1, dans lequel lesdites barres de liaison (11, 13 ; 15, 17 ; 115, 117) espacées sont une paire de barres de liaison supérieures et une paire de barres de liaison inférieures, et dans lequel ladite barre de support de vérin (40, 60, 110) est une barre de support de vérin transversale (110) accouplée de manière fixe au niveau d'extrémités à des extrémités de barres de liaison inférieures (115, 117) sur un côté dudit plateau mobile (118) opposé audit plateau fixe (14), ladite barre de support (110) comprenant une section centrale surélevée (104) ; et dans lequel ledit cylindre transversal (150) comporte une extrémité accouplée à la section centrale (104) de ladite barre de support (110) et une extrémité opposée accouplée audit plateau mobile (118) de telle sorte que l'axe longitudinal (D) dudit cylindre transversal (150) se situe au-dessus des axes longitudinaux (C) desdites barres de liaison inférieures (115, 117).

16. Système de montage selon la revendication 15, dans lequel ladite barre de support (110) est accouplée audit plateau mobile (118) par des tiges d'accouplement (120, 122) comportant une extrémité assujettie à des extrémités opposées de ladite barre de support (110) et une extrémité opposée assujettie aux extrémités desdites barres de liaison (115, 117).

17. Système de montage selon la revendication 16, et comprenant en outre un manchon de guidage (130, 132) entourant chacune desdites tiges d'accouplement (120, 122) de façon concentrique et espacée vis-à-vis de celles-ci.

18. Système de montage selon la revendication 17, dans lequel ladite barre de support (110) comprend des évidements (111, 113) destinés à recevoir une extrémité desdits manchons (130, 132).

19. Système de montage selon la revendication 18, dans lequel une extrémité opposée desdits manchons (130, 132) s'étend par-dessus une extrémité (119, 121) desdites barres de liaison inférieures (115, 117).
